# EUROPEAN PATENT APPLICATION

(11) **EP 3 561 908 A1**
(43) Date of publication of application: **30.10.2019**
(21) Application number: 19159897.8
(22) Date of filing: 28.02.2019
(51) Int. Cl.: H01M 2/20, H01M 2/34

(54) **BATTERY AND ELECTRODE CONDUCTOR THEREOF**

(30) Priority: 27.04.2018 CN 201810391069
(71) Applicant: Bosch Automotive Products (Suzhou) Co., Ltd., Jiangsu Sheng, Jiangsu 215021 (CN)
(72) Inventor: YU, Yin, Suzhou, Jiangsu 215024 (CN)
(74) Representative: Bee, Joachim

(57) **Abstract**

The present application provides a battery and an electrode conductor thereof. Multiple single cells are respectively fixed at cell positions of a support, each single cell comprising at least two electrodes. A mother plate of the electrode conductor is made of a first electrically conductive material, and multiple through-holes are provided therein. Multiple connecting plates are each made of a second electrically conductive material, each connecting plate comprising an electrode region and a current-limiting region, the electrode region being located in the through-hole and being electrically connected to the mother plate indirectly via the current-limiting region, with a conductor cross-sectional area of the current-limiting region being smaller than the electrode region. The electrode region of each connecting plate is electrically connected to one electrode of the single cell. The electrode conductor can automatically disconnect an electrode of a defective single cell from a circuit of the battery, to avoid causing damage to other normal cells.

## Description

### Technical field

The present application relates to a battery, in particular to a secondary battery formed of multiple single cells, and further relates to an electrically conductive component of a battery, for example an electrode conductor for electrically connecting electrodes of multiple single cells.

### Background art

A large-capacity secondary battery capable of being repeatedly charged and discharged is generally formed by combining multiple single cells, wherein multiple single cells or multiple groups of single cells are connected in parallel. After a period of use, there is a strong possibility that individual single cells will be short-circuited due to ageing, etc., while other single cells still perform well. At this time, there will be a sudden increase in current, which can easily destroy a battery by burning.

Thus, there is a need to provide an improved technical solution to overcome the technical problems in the prior art.

### Content of the invention

The main technical problem to be solved by the present application is the problem of batteries being easily destroyed by burning.

To solve the abovementioned technical problem, the present application provides an electrode conductor, for electrically connecting electrodes of multiple single cells in a battery, and comprising:
a mother plate, made of a first electrically conductive material, with multiple through-holes being provided therein; and
multiple connecting plates, each being made of a second electrically conductive material, each connecting plate comprising an electrode region and a current-limiting region, the electrode region being located in the through-hole and being electrically connected to the mother plate indirectly via the current-limiting region, with a conductor cross-sectional area of the current-limiting region being smaller than the electrode region.

The present application further provides a battery, comprising:
a support, provided with multiple cell positions;
multiple single cells, respectively fixed at the cell positions, each of the single cells comprising at least two electrodes; and
the electrode conductor described above, being fixed to the support, with the electrode region of each of the connecting plates being electrically connected to one of the electrodes of the single cells.

ln the technical solution according to the present application, due to the presence of the current-limiting region between the electrode region and the connecting region of the electrode conductor, the current-limiting region will melt through more quickly than other parts when an operating current of the battery exceeds an expected level, thereby disconnecting an electrode of a defective single cell from a circuit of the battery, and avoiding damage to other normal cells.

### Description of the accompanying drawings

By reading the following detailed explanation of particular embodiments with reference to the drawings, a fuller understanding of the present application will be gained; identical reference labels in the drawings represent identical elements. Here:
Fig. 1 shows a schematic diagram of a battery assembly according to a particular embodiment of the present application.
Fig. 2 shows a partially exploded schematic view of the battery assembly shown in fig. 1.
Fig. 3 shows a schematic diagram of an electrode conductor shown in fig. 2.
Fig. 4 shows a partial enlarged schematic view of the electrode conductor shown in fig. 3; and
Fig. 5 shows a partial enlarged schematic diagram of the relationship between an electrode conductor and a single cell in a battery.

### Particular embodiments

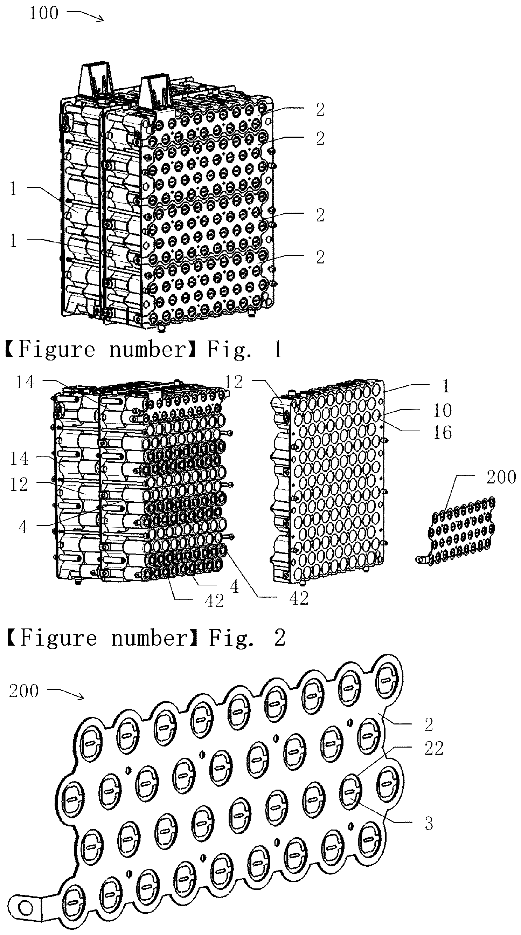

Referring to figs. 1 to 5, a battery 100 according to a particular embodiment of the present application comprises a support 1, the support 1 comprising an upper frame body 12 and a lower frame body 14; the upper frame body 12 and the lower frame body 14 are separately moulded from an electrically insulating material (e.g. a thermoplastic plastic) by an injection moulding process. The support 1 has an upper end face and a lower end face opposite each other, and multiple cell positions 10 are arranged in the support 1 between the upper end face and the lower end face; each cell position 10 runs through the support 1, and openings 16 are provided at two opposite ends of each cell position 10. Multiple single cells 4 are respectively fixed at the cell positions 10, each single cell 4 comprising at least two electrodes 42. The single cell 4 has a part located in the upper frame body 12 and a part located in the lower frame body 14. Each electrode 42 of each single cell 4 is located at one opening 16. For example, a portion of the single cells 4 have positive electrodes located at upper openings 16 and negative electrodes located at lower openings 16; another portion of the single cells 4 conversely have positive electrodes located at lower openings 16 and negative electrodes located at upper openings 16. The support 1 is made of a fire-retardant and insulating material; the support 1 covers a peripheral side of each single cell 4, isolating the multiple cell positions 10 from each other at peripheral sides. In the process of using the battery 100, when an individual single cell 4 is destroyed, the support 1 can prevent adverse effects thereof from spreading to single cells 4 at the periphery of the destroyed single cell 4. The multiple single cells 4 are divided into multiple groups, each group having a number of single cells 4. For example, as shown in fig. 2, each pair of rows of single cells 4 are one group, each group having a total of 18 single cells 4; there are 7 groups in total. A group of single cells 4 adjacent to each group of single cells 4 has opposite polarity; that is to say, a group of 18 single cells 4 has positive electrodes above and negative electrodes below, while an adjacent group of 18 single cells 4 has negative electrodes above and positive electrodes below, and so on.

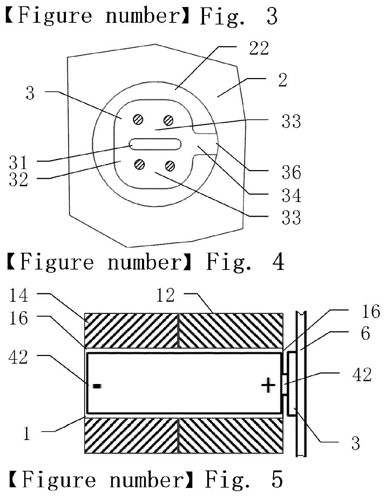

An electrode conductor 200 is electrically connected to electrodes 42 of multiple single cells 4. For example, the electrode conductor 200 as shown in fig. 3 is connected to 36 single cells 4, wherein it is connected to the positive electrodes of 18 single cells 4 and connected to the negative electrodes of the other 18 single cells 4; that is to say, the 18 single cells 4 whose positive electrodes are connected together are connected in parallel to form a first group of cells, the 18 single cells 4 whose negative electrodes are connected together are connected in parallel to form a second group of cells, and the first group of cells and the second group of cells are connected in series. The electrode conductor 200 is clamped between a backplate 6 and the support 1, i.e. the electrode conductor 200 is fixed to an end face of the support 1 (i.e. the upper end face and the lower end face); the backplate 6 is mounted at that side of the electrode conductor 200 which is remote from the electrodes 42. The backplate 6 is an insulator, and supports the electrode conductor 200.

The electrode conductor 200 comprises a mother plate 2 and multiple connecting plates 3. An electrode region 32 of each connecting plate 3 is electrically connected to one electrode 42 of the single cell 4. The mother plate 2 is made of a first electrically conductive material, and multiple through-holes 22 are provided therein. The connecting plate 3 is made of a second electrically conductive material. The resistivity of the second electrically conductive material is greater than the resistivity of the first electrically conductive material. For example, the mother plate 2 is formed by stamping a copper metal plate, and has a low resistivity and good electrical and thermal conductivity; the connecting plate 3 is made by stamping a nickel metal plate, and has good weldability, good mechanical strength and high heat resistance, as well as being corrosion resistant.

Each connecting plate 3 comprises an electrode region 32, a current-limiting region 34 and a connecting region 36.

The connecting region 36 is electrically connected to the mother plate 2 by welding; the electrode region 32 is located in the centre of the through-hole 22 and is not in direct contact with the mother plate 2. The electrode region 32 is provided with an isolating slot 31; the isolating slot 31 divides the electrode region 32 into at least two contact regions 33. The contact regions 33 are in direct contact with the electrode 42, e.g. the contact regions 33 are welded to the electrode 42 by spot welding. The isolating slot 31 crosses a central position of the electrode region 32; the isolating slot 31 reduces heat conduction between the contact regions 33, making it easier to weld each contact region 33 separately. The current-limiting region 34 is located between the electrode region 32 and the connecting region 36; in the course of operation, a current passes through the electrode 42, the electrode region 32, the current-limiting region 34 and the connecting region 36 in sequence (or a current passes sequentially in the opposite direction). That is to say, the electrode 42 of each single cell 4 is locally connected in series with the electrode region 32, the current-limiting region 34 and the connecting region 36 in the circuit. A conductor cross-sectional area of the current-limiting region 34 is smaller than the electrode region 32, and a conductor cross-sectional area of the connecting region 36 is not smaller than the current-limiting region 34. Thus, when a current passes through, the current-limiting region 34 has the largest resistance and hence the greatest heat generation; moreover, heat dissipation in the current-limiting region is more difficult than in the connecting region 36, which is in direct contact with the mother plate 2, which has strong heat dissipation capability. Therefore, local high temperatures are most likely to arise in the current-limiting region 34, and since the conductor cross-sectional area of the current-limiting region 34 is small, the current-limiting region 34 is most likely to melt through. Thus, if a single cell 4 develops a fault, e.g. the single cell 4 is short-circuited, then the current will increase, and when the current is too large, the current-limiting region 34 will melt through, thereby automatically disconnecting the defective single cell 4 from the circuit. In the case where the connecting plate 3 is made by stamping a metal plate, the effective width of the electrode region 32 is greater than 1.5 times the effective width of the current-limiting region 34. Those skilled in the art know that the effective width of a conductor is the sum of the widths of parts capable of conducting current in one cross section, e.g. a hollowed-out part of a conductor does not conduct current, therefore the width of this part is not included in the effective width. Sheet material has a fixed thickness, and it is easy for the conductor cross-sectional area of the electrode region 32 to be made sufficiently greater than the conductor cross-sectional area of the current-limiting region 34 through a suitable width design. Although the particular embodiments above include the connecting region 36, with the current-limiting region 34 being electrically connected to the mother plate 2 via the connecting region 36 indirectly, the present application is not limited to such embodiments. In other feasible particular embodiments, there may be no obvious connecting region 36, with the current-limiting region 34 being electrically connected to the mother plate 2 directly. As long as the electrode region 32 is electrically connected to the mother plate 2 indirectly via the current-limiting region 34, i.e. the electrode region 32 is not electrically connected to the mother plate 2 directly, a substantially identical effect can be achieved.

The particular embodiments above are merely intended to explain the present application, without restricting it. Those skilled in the art could still make various changes and modifications without departing from the scope of the present application, thus all equivalent technical solutions are also included in the category of the present application, and the scope of patent protection of the present application should be defined by the claims.

## Claims

**1.** Electrode conductor (200), for electrically connecting electrodes (42) of multiple single cells (4) in a battery (100), **characterized by** comprising:
a mother plate (2), made of a first electrically conductive material, with multiple through-holes (22) being provided therein; and
multiple connecting plates (3), each being made of a second electrically conductive material, each connecting plate (3) comprising an electrode region (32) and a current-limiting region (34), the electrode region (32) being located in the through-hole (22) and being electrically connected to the mother plate (2) indirectly via the current-limiting region (34), with a conductor cross-sectional area of the current-limiting region (34) being smaller than the electrode region (32).

**2.** Electrode conductor (200) according to Claim 1, wherein the resistivity of the second electrically conductive material is greater than the resistivity of the first electrically conductive material, the connecting plate (3) is formed by stamping a metal plate, and the effective width of the electrode region (32) is greater than 1.5 times the effective width of the current-limiting region (34).

**3.** Electrode conductor (200) according to Claim 1, further comprising a connecting region (36), the connecting region (36) being fixed to the mother plate (2) in an electrically connected manner, with the current-limiting region (34) being located between the electrode region (32) and the connecting region (36).

. Electrode conductor (200) according to Claim 3, wherein each of the connecting plates (3) only has one said connecting region (36), the connecting region (36) being welded to the mother plate (2), and a conductor cross-sectional area of the connecting region (36) not being smaller than the current-limiting region (34).

**5.** Electrode conductor (200) according to Claim 1, wherein the electrode region (32) is provided with an isolating slot (31) for reducing heat conduction, the isolating slot (31) dividing the electrode region (32) into at least two contact regions (33) for electrically connecting to the electrode (42) of the single cell (4).

**6.** Electrode conductor (200) according to Claim 5, wherein the isolating slot (31) crosses the centre of the electrode region (32).

**7.** Battery (100), **characterized by** comprising:
a support (1), provided with multiple cell positions (10);
multiple single cells (4), respectively fixed at the cell positions (10), each of the single cells (4) comprising at least two electrodes (42); and
the electrode conductor (200) according to any one of Claims 1 to 6, being fixed to the support (1), with the electrode region (32) of each of the connecting plates (3) being electrically connected to one of the electrodes (42) of the single cells (4).

**8.** Battery (100) according to Claim 7, wherein the quantity of the single cells (4) does not exceed 300 and is not less than 30, the support (1) comprises an upper frame body (12) and a lower frame body (14) which are separately moulded by an injection moulding process, and the single cell (4) has a part located in the upper frame body (12) and a part located in the lower frame body (14).

**9.** Battery (100) according to Claim 7, wherein each of the cell positions (10) runs through the support (1), and openings (16) are provided at two opposite ends of the cell position (10), with each electrode (42) of each of the single cells (4) being located at one of the openings (16).

**10.** Battery (100) according to Claim 7, further comprising a backplate (6), with the electrode conductor (200) being clamped between the backplate (6) and the support (1), the support (1) being made of a fire-retardant material, and the support (1) covering a peripheral side of each of the single cells (4), isolating the multiple cell positions (10) from each other at peripheral sides.
